# EUROPÄISCHE PATENTANMELDUNG

(11) **EP 3 059 833 A1**
(43) Veröffentlichungstag der Anmeldung: **24.08.2016**
(21) Anmeldenummer: 15155556.2
(22) Anmeldetag: 18.02.2015
(51) Int. Cl.: H02K 1/24, B02C 17/24

(54) **Integration einer Tragstruktur in den elektrisch aktiven Bereich eines Läuferpols**

(71) Anmelder: Siemens Aktiengesellschaft, 80333 München (DE)
(72) Erfinder: Hartmann, Ulrich, 14197 Berlin (DE); Kümmlee, Horst, 13505 Berlin (DE); Rakowicz, Marian, 10247 Berlin (DE); Walberer, Georg, 95506 Kastl (DE)

(57) **Zusammenfassung**

Zusammenfassend betrifft die Erfindung ein Polsegment (1) für einen Läufer (21) insbesondere einer Synchronschenkelpolmaschine (19) aufweisend eine Grundplatte (5), ein Blechpaket (6), welches mindestens zwei Einzelbleche (7) aufweist, und eine Versteifungskomponente (12), welche dafür vorgesehen ist, das Blechpaket (6) mit der Grundplatte (5) mechanisch zu versteifen. Um den Wirkungsgrad der Synchronschenkelpolmaschine (19) zu steigern und die Herstellungskosten zu verringern, wird vorgeschlagen die Versteifungskomponente (12) in das Blechpaket (6) zu integrieren.

## Beschreibung

Die Erfindung betrifft ein Polsegment für einen Läufer insbesondere einer Synchronschenkelpolmaschine aufweisend eine Grundplatte, ein Blechpaket, welches mindestens zwei Einzelbleche aufweist, und eine Versteifungskomponente, welche dafür vorgesehen ist, das Blechpaket mit der Grundplatte mechanisch zu versteifen.

Weiterhin betrifft die Erfindung einen Läufer für eine Synchronschenkelpolmaschine mit mindestens einem derartigen Polsegment.

Ferner betrifft die Erfindung eine Synchronschenkelpolmaschine, insbesondere zum getriebelosen Antrieb von Rohrmühlen, mit mindestens einem derartigen Läufer.

Darüber hinaus betrifft die Erfindung ein Fertigungsverfahren zur Fertigung eines derartigen Polsegments.

Ein derartiges Polsegment kommt insbesondere bei sehr großen segmentierten Synchronschenkelpolmaschinen, beispielsweise zum getriebelosen Antrieb von Rohrmühlen, mit einer Leistung von mehr als fünf Megawatt und einem großen Durchmesser von beispielsweise fünfzehn Metern zum Einsatz. Eine segmentierte Synchronschenkelpolmaschine weist einen Ständer und einen Läufer auf, wobei der Läufer im Ständer um eine Achse drehbar ist, wodurch eine axiale Richtung und eine radiale Richtung definiert sind. Der Läufer weist eine Vielzahl von Polsegmenten auf, welche beispielsweise vier Schenkelpole, auch Erregerpole genannt, aufweisen, und auf einem um die Rotationsachse angeordneten Kreisumfang angeordnet sind. Die Erregerspulen sind um die Erregerpole gewickelt, wobei der Erregerpol einen elektrisch notwendigen Eisenteil, ein sogenanntes Poleisen, welches beispielsweise in Form eines Blechpakets realisiert ist, aufweist. Das Poleisen wird mit einer Grundplatte des Polsegments, beispielsweise über Rippen, welche unterhalb des elektrisch aktiven Eisenteils angeordnet sind, mechanisch versteift. Zusätzlich werden Bolzen, welche Fädelbolzen genannt werden, verwendet, die durch die Grundplatte gesteckt werden, um die Einzelbleche des Blechpakets zu schichten und bezogen auf den Mühlenflanschdurchmesser zu positionieren, was zu einem erheblichen Aufwand in der Fertigung führt. Weiterhin ist bei diesem Konzept keine Bearbeitung des zum Luftspalt zeigenden Poleisens vorgesehen, weshalb die Fertigungsfehler, die beim Schichten der Einzelbleche des Blechpakets entstehen, zu einer geometrischen Abweichung des Nennluftspaltmaßes führen. Außerdem ist der Bauraum unterhalb des elektrisch aktiven Teils durch die Rippen verknappt und bewirkt, dass die elektrischen Abmessungen der Maschine, insbesondere der Innendurchmesser und der Außendurchmesser, bezogen auf den Mühlendurchmesser nicht ganz frei auslegbar sind. Darüber hinaus ist durch die oben beschriebenen Fertigungsabweichungen der Nennluftspalt nicht konstant, was negative Auswirkungen auf die Leistungskurve und den Wirkungsgrad der Maschine hat.

Aus DE 100 58 911 B4 ist eine Rohrmühle mit einem dynamoelektrischen Antriebsmotor, dessen aus einer Vielzahl von Polen bestehender Rotor an einem Ringflansch des Mühlenkörpers befestigt ist, bekannt, wobei jeweils mehrere Pole zu Rotorsegmenten zusammengefasst sind und jedes Rotorsegment mit einem in Umfangsrichtung des Ringflansches verlaufenden, axial mit dem Ringflansch verschraubten Tragsteg versehen ist.

Aus DE 10 2005 042 543 A1 ist eine permanenterregte Synchronmaschine mit einem Stator, der ein Wicklungssystem aufweist, mit auf einem Polrad angeordneten Polsegmenten, bekannt, wobei die Polsegmente im Bereich ihrer Polschuhe jeweils mit einer oder mehreren Ausnehmungen versehen sind, in die mindestens ein dazu korrespondierendes Gegenstück als Befestigungselement am Polrad vorgesehen ist, wobei das Polrad aus mindestens zwei konzentrischen, scheibenförmigen Elementen und dazu senkrecht axial verlaufenden paarweise ausgerichteten Stegen gebildet ist.

Aus DE 10 2006 020 149 A1 ist eine Synchronschenkelpolmaschine bekannt, welche einen Ständer und einen Läufer umfasst. Der Läufer umfasst eine Mehrzahl von Schenkelpolen, um welche Erregerspulen gewickelt sind. Zwischen den Schenkelpolen sind Pollücken ausgebildet, deren Boden durch einen Jochabschnitt gebildet ist.

Der Erfindung liegt die Aufgabe zugrunde, ein Polsegment für einen Läufer einer Synchronschenkelpolmaschine anzugeben, bei dem sich der Wirkungsgrad der Synchronschenkelpolmaschine steigert und sich die Herstellungskosten verringern.

Die Aufgabe wird erfindungsgemäß durch ein Polsegment für einen Läufer insbesondere einer Synchronschenkelpolmaschine gelöst, welches eine Grundplatte, ein Blechpaket, welches mindestens zwei Einzelbleche aufweist, und eine Versteifungskomponente, welche dafür vorgesehen ist das Blechpaket mit der Grundplatte mechanisch zu versteifen, aufweist, wobei die Versteifungskomponente in das Blechpaket integriert ist.

Weiterhin wird die Aufgabe erfindungsgemäß durch einen Läufer für eine Synchronschenkelpolmaschine mit mindestens einem derartigen Polsegment gelöst.

Ferner wird die Aufgabe erfindungsgemäß durch eine Synchronschenkelpolmaschine, insbesondere zum getriebelosen Antrieb von Rohrmühlen, mit mindestens einem derartigen Läufer gelöst.

Darüber hinaus wird die Aufgabe erfindungsgemäß durch ein Fertigungsverfahren zur Fertigung eines derartigen Polsegments gelöst.

Durch die Integration der Versteifungskomponente in das bestehende Blechpaket wird der Bauraum, den die Polsegmente benötigen, deutlich reduziert, wodurch mehr Freiheitsgrade für die elektrischen Aspekte und Kühlaspekte bei der Dimensionierung der Polsegmente entstehen. Weiterhin verringert sich der Montageaufwand durch die Integration der Versteifungskomponente in das bestehende Blechpaket, was sich positiv auf die Herstellkosten auswirkt. Überdies wird die Fertigungsgenauigkeit erheblich gesteigert, da die Außenkontur nach der Montage in direktem Bezug auf den Bezugsdurchmesser mechanisch bearbeitet wird. Das wiederum führt im Endresultat zu einem höheren Wirkungsrad der gesamten Maschine, da der Bemessungs-Luftspaltdurchmesser um den Betrag der Verbesserung der Fertigungsgenauigkeit verringert werden kann.

Bei einer weiteren vorteilhaften Ausgestaltung weist das Blechpaket eine Schweißnaht auf, wobei die Schweißnaht dafür vorgesehen ist, die Einzelbleche des Blechpakets miteinander und mit der Grundplatte mechanisch zu verbinden. Dies ist besonders vorteilhaft, da durch die Schweißnaht auf Fädelbolzen, die durch die Grundplatte gesteckt werden, um die Einzelbleche des Blechpakets zu schichten und bezogen auf den Mühlenflanschdurchmesser zu positionieren, verzichtet werden kann. Dadurch werden Aufwände in der Fertigung und Fertigungsfehler, welche zu einer geometrischen Abweichung des Nennluftspaltmaßes führen, reduziert.

In besonders vorteilhafter Weise ist die Versteifungskomponente als integrierte Rippe ausgebildet. Dies ist vorteilhaft, da durch die Integration der Rippe in das bestehende Blechpaket der Montageaufwand verringert und die Fertigungsgenauigkeit gesteigert wird.

Bei einer bevorzugten Ausführungsform ist die Versteifungskomponente als Formstahl ausgebildet.

Der Formstahl, beispielsweise ein bearbeitetes Stahlprofil, ein Vollprofil oder ein Rundprofil, ist flexibel zur Versteifung einsetzbar und kann, abhängig von der Form und der Positionierung, weitere, beispielsweise elektrische und/oder mechanische, Funktionen erfüllen.

In besonders vorteilhafter Weise verläuft die als Formstahl ausgebildete Versteifungskomponente in axialer Richtung durch einen Schenkelpol. Durch die Integration des versteifenden Formstahls in einen Schenkelpol, den elektrisch wirksamen Teil des Poleisens, wird der Bauraum, den die Polsegmente benötigen, deutlich reduziert, wodurch mehr Freiheitsgrade für die elektrischen Aspekte und Kühlaspekte bei der Dimensionierung der Polsegmente entstehen.

In einer weiteren vorteilhaften Ausgestaltung ist die als Formstahl ausgebildete Versteifungskomponente dafür vorgesehen die Einzelbleche des Blechpakets miteinander und mit der Grundplatte mechanisch zu verbinden. Dies ist vorteilhaft, da der Formstahl neben der Versteifung des Blechpakets mit der Grundplatte eine zusätzliche mechanische Funktionalität, nämlich die Verbindung der Einzelbleche des Blechpakets miteinander und mit der Grundplatte, übernimmt und so Bauraum eingespart wird.

In einer bevorzugten Ausführungsform ist die als Formstahl ausgebildete Versteifungskomponente über eine Schweißnaht und/oder eine Verschraubung mit dem Blechpaket mechanisch verbunden. Dadurch werden Fertigungsaufwand und Fertigungsfehler reduziert, was sich positiv auf die Herstellkosten auswirkt.

Bei einer weiteren vorteilhaften Ausgestaltung weist das Polsegment mindestens zwei Schenkelpole auf. Um den Montageaufwand und Toleranzen, die sich bei der Montage der Polsegmente auf den Ringflansch ergeben, gering zu halten ist es vorteilhaft, dass ein Polsegment mindestens zwei, beispielsweise vier, Schenkelpole aufweist.

In besonders vorteilhafter Weise erfolgen das Verschweißen der Einzelbleche des Blechpakets mit der Grundplatte und die Versteifung des Blechpakets mit der Grundplatte in einem Arbeitsschritt. Das Fertigungsverfahren kann durch den Wegfall der Montage der Bolzen und der damit notwenigen zwei Arbeitsschritte kosteneffizienter und schneller durchgeführt werden.

In einer bevorzugten Ausführungsform wird das Funktionsmaß nach der Montage des Läufers im Bezug auf den Durchmesser des Läufers durch mechanische Bearbeitung hergestellt. Dies führt zu geringeren Toleranzen, wodurch der Bemessungs-Luftspaltdurchmesser verringert werden kann. Dies steigert den Wirkungsgrad der gesamten Maschine.

Im Folgenden wird die Erfindung anhand der in den Figuren dargestellten Ausführungsbeispiele näher beschrieben und erläutert.

Es zeigen:
- FIG 1: eine prinzipielle Darstellung einer Synchronschenkelpolmaschine,
- FIG 2: eine dreidimensionale Darstellung eines vierpoligen Polsegments nach dem Stand der Technik,
- FIG 3: einen Querschnitt durch ein Polsegment nach dem Stand der Technik,
- FIG 4: den schematischen Ablauf eines Fertigungsverfahrens eines Polsegments nach dem Stand der Technik,
- FIG 5: einen Querschnitt durch ein Polsegment mit integrierten Rippen,
- FIG 6: eine dreidimensionale Darstellung eines vierpoligen Polsegments mit durch die Schenkelpole verlaufenden Stahlprofilen,
- FIG 7: eine dreidimensionale Darstellung der durch die Schenkelpole des Polsegments verlaufenden Stahlprofile,
- FIG 8: eine dreidimensionale Darstellung eines vierpoligen Polsegments mit durch die Schenkelpole verlaufenden Vollprofilen,
- FIG 9: einen Querschnitt durch die offen überstehende Anbindung eines Vollprofiles an das Blechpaket,
- FIG 10: einen Querschnitt durch die offene Anbindung eines Vollprofiles an das Blechpaket und
- FIG 11: einen Querschnitt durch die umschlossene Anbindung eines Vollprofiles an das Blechpaket.

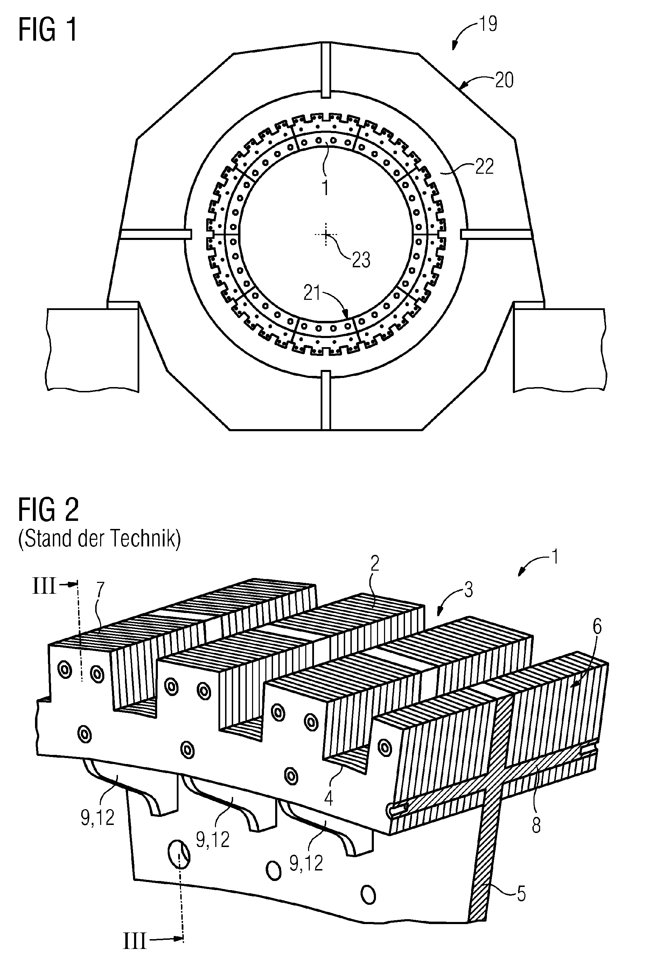

FIG 1 zeigt eine Synchronschenkelpolmaschine 19, insbesondere einen Ringmotor, in einer prinzipiellen Darstellung. Die dargestellte Maschine weist einen Ständer 20 und einen Läufer 21 mit Polsegmenten 1 auf. Ein Luftspalt 22 befindet sich zwischen dem Ständer 20 und dem Läufer 21. Bei elektrisch erregten Maschinen mit großem Durchmesser, beispielsweise Ringmotoren für Mühlenantriebe, welche einen Durchmesser von 15 Meter und mehr haben können, werden die Polsegmente 1 in segmentierter Bauweise ausgeführt.

FIG 2 zeigt eine dreidimensionale Darstellung eines vierpoligen Polsegments 1 nach dem Stand der Technik. Zwischen den exemplarisch dargestellten vier Schenkelpolen 2, auch Erregerpole genannt, des Polsegments 1, um welche in der Zeichnung aus Gründen der Übersichtlichkeit nicht dargestellte Erregerspulen gewickelt werden, sind Pollücken 3 ausgebildet, deren Boden durch einen Jochabschnitt 4 gebildet ist. Das Polsegment weist eine Grundplatte 5 und ein Blechpaket 6 auf, welches aus mehreren Einzelblechen 7 besteht. Diese Einzelbleche 7 werden durch mehrere Bolzen 8, Fädelbolzen genannt, miteinander und mit der Grundplatte 5 mechanisch verbunden.

Aus Festigkeitsgründen ist das Blechpaket, der elektrisch notwendige Eisenteil des Polsegments 1, mit der Grundplatte 5 über eine Versteifungskomponente 12 mechanisch versteift. Beispielsweise erfolgt die Versteifung über Rippen 9, welche unterhalb des elektrisch aktiven Eisens angeordnet sind.

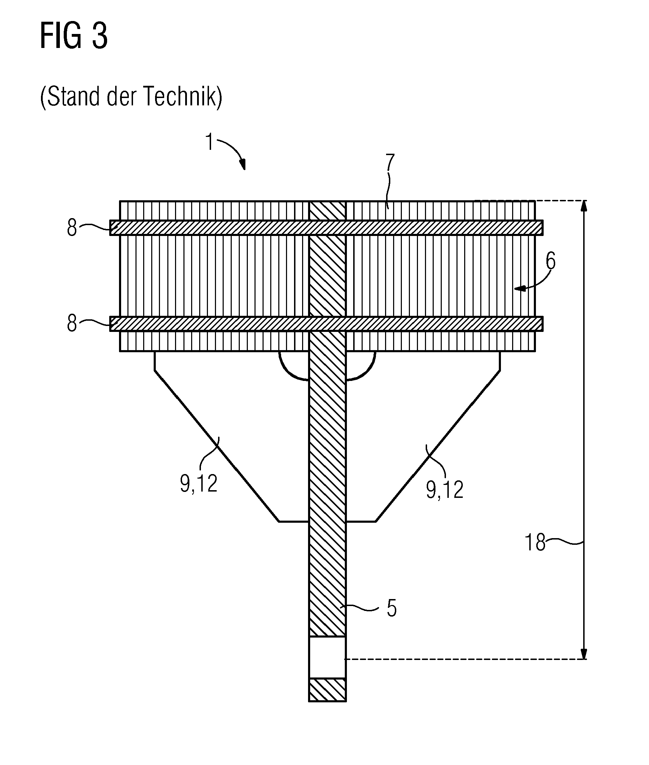

FIG 3 zeigt einen Querschnitt durch das oben beschriebene Polsegment 1 aus FIG 2 nach dem Stand der Technik. Die Versteifung erfolgt hier mit nicht durchgehenden Rippen 9, welche am Blechpaket 6 und an der Grundplatte 5 angeschweißt sind.

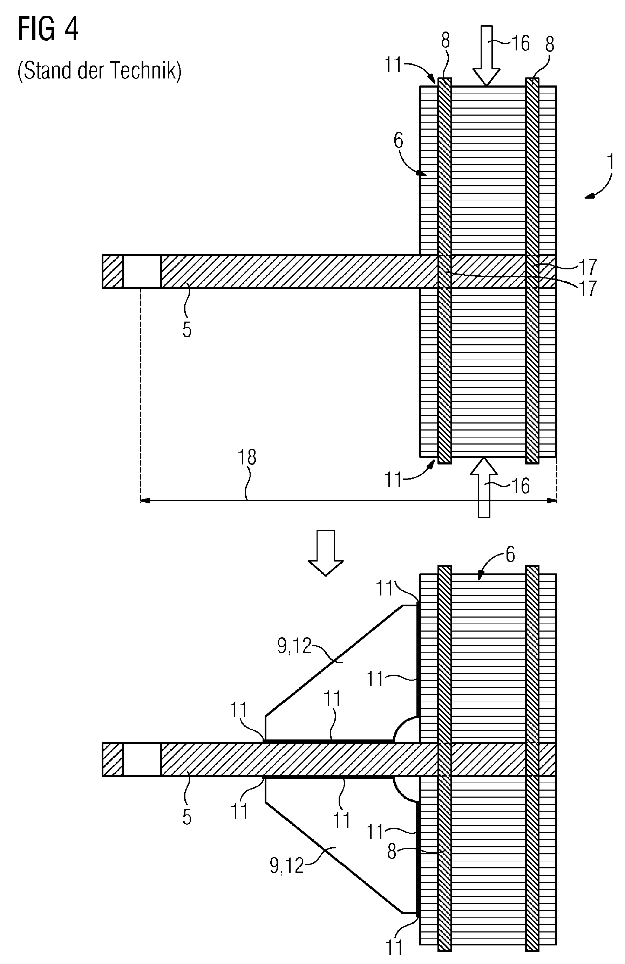

FIG 4 zeigt den schematischen Ablauf eines Fertigungsverfahrens eines Polsegments 1 nach dem Stand der Technik. Im ersten Schritt werden Bolzen 8 durch die Grundplatte 5 gesteckt, um die Einzelbleche 7 des Blechpakets 6 zu schichten und bezogen auf den Mühlenflanschdurchmesser zu positionieren. Dabei werden die Einzelbleche 7 des Blechpakets 6 unter Druck 16 an die Grundplatte 5 gepresst, um beispielsweise Schrauben für die Bolzen zu fixieren. Eine Passung 17 zwischen dem Bolzen 8, dem Blechpaket 6 und der Grundplatte 5 ist notwendig und erfordert hohe Genauigkeit. In einem zweiten Schritt werden die Rippen 9, die als Versteifungskomponente 12 verwendet werden, über mehrere Schweißnähte 11 mit der Grundplatte 5 und dem Blechpaket 6 verscheißt.

Dieses zweistufige Verfahren führt zu erheblichen Aufwendungen in der Fertigung, was auch mit hohen Fertigungskosten verbunden ist. Zudem ist bei diesem Fertigungsverfahren keine Bearbeitung des zum Luftspalt 22 zwischen Ständer 20 und Läufer 21 zeigenden Blechpakets 6, welches auch Poleisen genannt wird, vorgesehen, weshalb Schwankungen des Funktionsmaßes 18, die beim Schichten der Einzelbleche 7 entstehen, zu einer geometrischen Abweichung des Nennluftspaltmaßes führen. Das Problem, das daraus entsteht, ist somit eine ungenaue und aufwendige Fertigung. Weiterhin ist der Bauraum unterhalb des eigentlich elektrisch aktiven Teils durch die Rippen 9 verknappt und bewirkt, dass die elektrischen Abmessungen der Maschine bezogen auf den Mühlendurchmesser, insbesondere der Innendurchmesser und der Außendurchmesser, nicht ganz frei auslegbar sind. Darüber hinaus ist durch die Fertigungsabweichungen der Luftspalt 22 nicht konstant, was negative Auswirkungen auf die Leistungskurve und den Wirkungsgrad der Maschine hat. Bauteile werden zum Teil auf der Baustelle ausgetauscht oder die sich einstellende Fehlermeldung wird bei der Inbetriebsetzung toleriert. Das führt zum Teil zur Mehraufwendungen und zeitlichen Verzögerungen beim Endkunden.

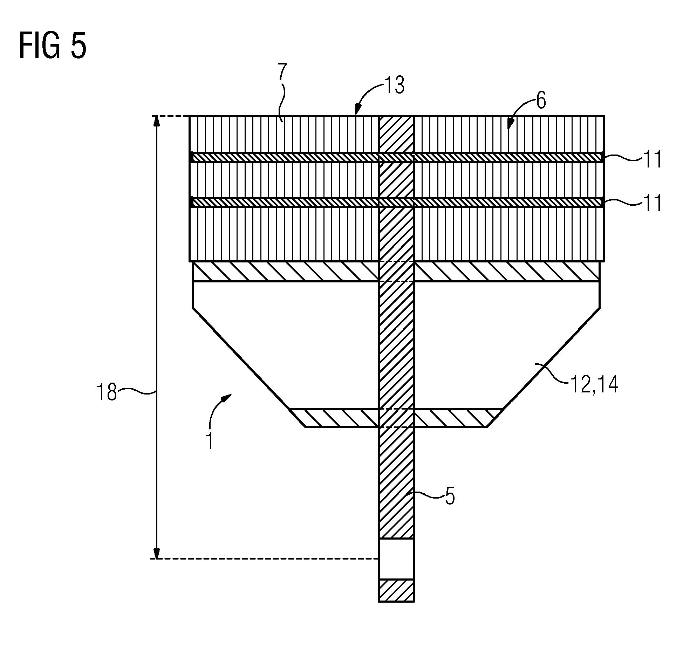

FIG 5 zeigt einen Querschnitt durch ein Polsegment mit integrierten Rippen 14. Die in FIG 2 bis FIG 4 gezeigten an das Blechpaket 6 und die Grundplatte 5 geschweißten Rippen 9 sind bei dieser bevorzugten Ausführungsform in das Blechpaket integriert. Die integrierten Rippen 14, die als Versteifungskomponente 12 eingesetzt werden, sind Teil des Blechpakets 6. Das Blechpaket weist Schweißnähte 11 auf, die die Einzelbleche 7 mit den integrierten Rippen 9 des Blechpakets 6 miteinander und mit der Grundplatte 5 mechanisch zu verbinden. Das mechanische Zusammenfügen des Blechpakets 6 an die Grundplatte 5 und die Versteifung durch die integrierten Rippen 14 erfolgt in einem Fertigungsschritt. Die anschließende mechanische Bearbeitung der Außenkontur zur Herstellung eines exakten Funktionsmaßes 18 erfolgt nach der Montage in direktem Bezug auf den Bezugsdurchmesser, wodurch die Fertigungsgenauigkeit erheblich gesteigert wird. Das wiederum führt im Endresultat zu einem höheren Wirkungsrad der gesamten Maschine, da der Luftspalt 22 um den Betrag der Verbesserung der Fertigungsgenauigkeit verkleinert werden kann.

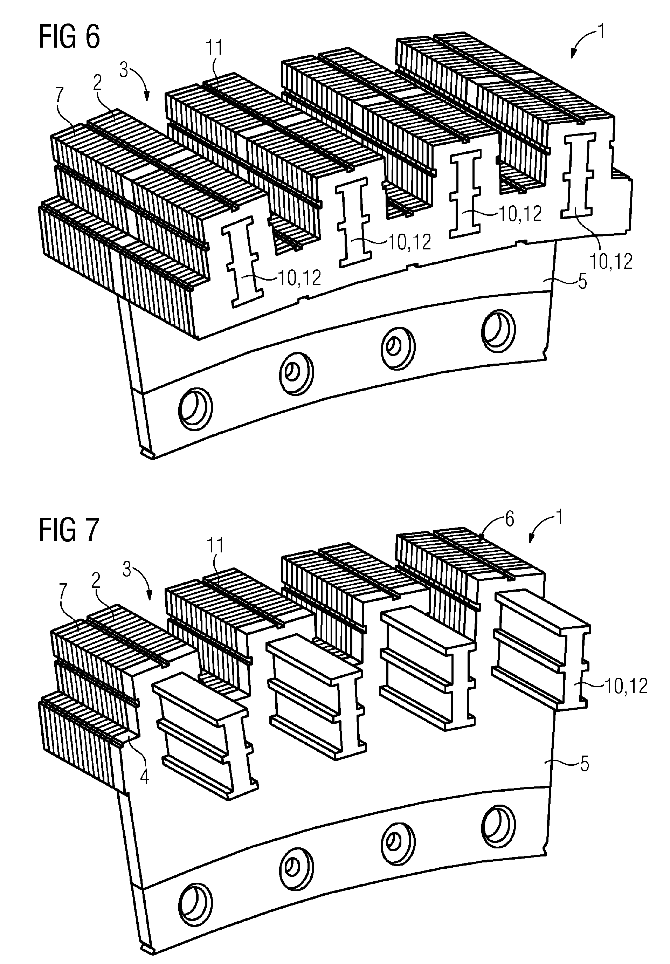

FIG 6 zeigt eine dreidimensionale Darstellung eines vierpoligen Polsegments 1 mit durch die Schenkelpole 2 verlaufenden Stahlprofilen. Die Erregerspulen sind in der Zeichnung aus Gründen der Übersichtlichkeit nicht dargestellt. Das Blechpaket weist Schweißnähte 11 auf, die die Einzelbleche 7 des Blechpakets 6 miteinander und mit der Grundplatte 5 mechanisch verbinden. Die Versteifungskomponente 12 ist als Formstahl 10, welcher als ein bearbeitetes Stahlprofil ausgeführt ist, in den elektrisch wirksamen Teil des Polsegments 1 derartig integriert, dass jeweils eine als Formstahl 10 ausgebildete Versteifungskomponente 12 in axialer Richtung durch einen der vier dargestellten Schenkelpole 2 des vierpoligen Polsegments 1 verläuft.

Durch die Integration der Versteifungskomponenten 12 in das bestehende Blechpaket 6 wird Platz unterhalb des Blechpakets 6 gewonnen wodurch der Bauraum, den die Polsegmente 1 benötigen, deutlich reduziert wird. Dadurch entstehen mehr Freiheitsgrade für die elektrischen Aspekte und Kühlaspekte bei der Dimensionierung der Polsegmente 1. Weiterhin verringert sich der Montageaufwand durch die Integration der Versteifungskomponente 12 in das bestehende Blechpaket 6, was sich positiv auf die Herstellkosten auswirkt.

FIG 7 zeigt eine dreidimensionale Darstellung der durch die Schenkelpole 2 des Polsegments 1 verlaufenden Stahlprofile, welche in axialer Richtung durch die Grundplatte 5 und das Blechpaket 6 verlaufen. Die Erregerspulen sind in der Zeichnung aus Gründen der Übersichtlichkeit nicht dargestellt. Der Formstahl 10, welcher als ein bearbeitetes Stahlprofil ausgeführt ist, weist eine Kontur mit mehreren Erhebungen auf, um die Einzelbleche 7 des Blechpakets 6 miteinander und mit der Grundplatte 5 möglichst stabil zu verbinden. Die Konturen der bearbeiteten Stahlprofile und die dazu passenden Löcher in den Einzelblechen 7 des Blechpakets 6 sowie in der Grundplatte 5 sind für exemplarisch alle vier dargestellten Schenkelpole 2 identisch.

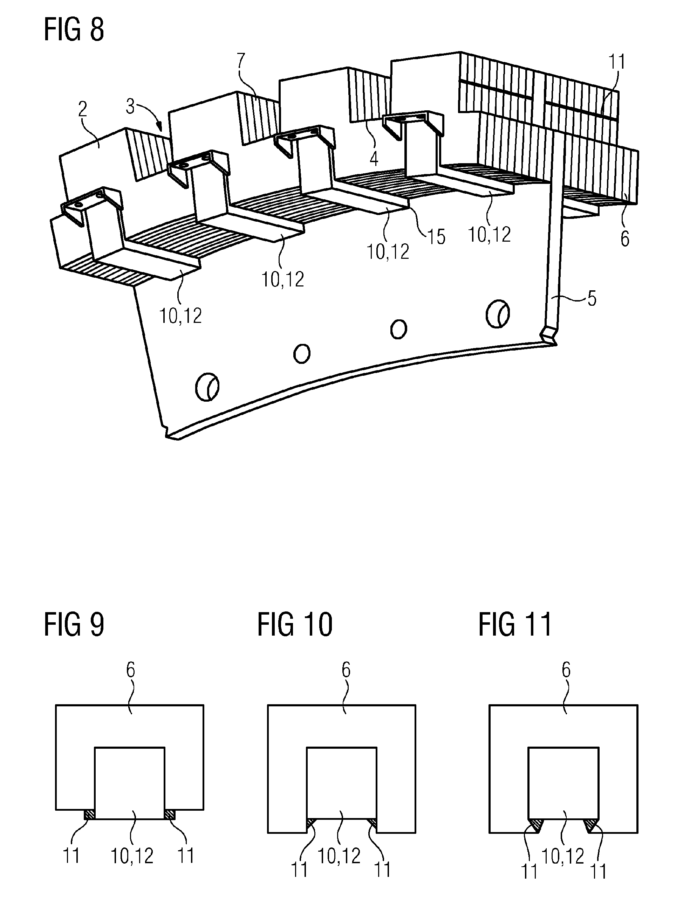

FIG 8 zeigt eine dreidimensionale Darstellung eines vierpoligen Polsegments 1 mit durch die Schenkelpole 2 verlaufenden Vollprofilen. Alternativ können Rundprofile verwendet in die Schenkelpole 2 eingesetzt werden. Diese weitere vorteilhafte Ausgestaltung zeigt, dass durch die Verwendung von als Vollprofilen ausgeführtem Formstahl 10 zur Versteifung eine mechanische Anbindung 15 der Versteifungskomponenten 12 an die Grundplatte 5 und das Blechpaket 6 entsteht, welche durch eine Schweißnaht mechanisch verbunden werden kann. Zusätzlich oder alternativ kann das Aufbringen der notwendigen Verbindung zwischen Grundplatte und Blechpaket durch Verschraubungen, die in dem eingesetzten Vollprofilen oder Rundprofilen verankert sind, erfolgen.

Weitere Schweißnähte 11 verbinden die Einzelbleche 7 des Blechpakets 6 miteinander und mit der Grundplatte 5. Eine Halterung zur Positionierung der in der Zeichnung aus Gründen der Übersichtlichkeit nicht dargestellten Erregerspulen auf den vier Schenkelpolen 2 ist ebenfalls in FIG 8 dargestellt.

FIG 9 bis FIG 11 zeigen in einem Querschnitt verschiedene Ausführungsformen der Anbindung 15 der als Formstahl 10 ausgeführten Versteifungskomponenten 12, insbesondere an das Blechpaket 6. FIG 9 zeigt eine offen überstehende Anbindung 15 der als Vollprofil ausgeführten Versteifungskomponente 12 an das Blechpaket 6. Dabei steht die als Formstahl 10 ausgeführte Versteifungskomponente 12 nach unten über das Blechpaket 6 hinaus, wobei der überstehende Teil des Formstahls 10 über jeweils eine Schweißnaht 11 mit dem Blechpaket 6 verbunden ist. FIG 10 zeigt einen Querschnitt durch die offene Anbindung 15 der als Vollprofil ausgeführten Versteifungskomponente 12 an das Blechpaket 6. Dabei steht das Blechpaket 6 auf beiden Seiten nach unten über die als Formstahl 10 ausgeführte Versteifungskomponente 12 hinaus, wobei der überstehende Teil des Blechpakets 6 über jeweils eine Schweißnaht 11 mit der Versteifungskomponente 12 verbunden ist. FIG 11 zeigt einen Querschnitt durch die umschlossene Anbindung 15 der als Formstahl 10 ausgeführten Versteifungskomponente 12 an das Blechpaket 6. Dabei umschließt das Blechpaket 6 zumindest teilweise die als Formstahl 10 ausgeführte Versteifungskomponente 12, wobei das Blechpakets 6 an der Öffnung über jeweils eine Schweißnaht 11 mit der Versteifungskomponente 12 verbunden ist.

Zusammenfassend betrifft die Erfindung ein Polsegment 1 für einen Läufer 21 insbesondere einer Synchronschenkelpolmaschine 19 aufweisend eine Grundplatte 5, ein Blechpaket 6, welches mindestens zwei Einzelbleche 7 aufweist, und eine Versteifungskomponente 12, welche dafür vorgesehen ist, das Blechpaket 6 mit der Grundplatte 5 mechanisch zu versteifen. Um den Wirkungsgrad der Synchronschenkelpolmaschine 19 zu steigern und die Herstellungskosten zu verringern, wird vorgeschlagen die Versteifungskomponente 12 in das Blechpaket 6 zu integrieren.

## Patentansprüche

1. Polsegment (1) für einen Läufer (21) insbesondere einer Synchronschenkelpolmaschine (19) aufweisend
- eine Grundplatte (5), ein Blechpaket (6), welches mindestens zwei Einzelbleche (7) aufweist, und
- eine Versteifungskomponente (12), welche dafür vorgesehen ist, das Blechpaket (6) mit der Grundplatte (5) mechanisch zu versteifen,
**dadurch gekennzeichnet, dass** die Versteifungskomponente (12) in das Blechpaket (6) integriert ist.

2. Polsegment (1) nach Anspruch 1,
**dadurch gekennzeichnet, dass** das Blechpaket (6) eine Schweißnaht (11) aufweist, wobei die Schweißnaht (11) dafür vorgesehen ist, die Einzelbleche (7) des Blechpakets (6) miteinander und mit der Grundplatte (5) mechanisch zu verbinden.

3. Polsegment (1) nach einem der Ansprüche 1 oder 2,
**dadurch gekennzeichnet, dass** die Versteifungskomponente (12) als integrierte Rippe (14) ausgebildet ist.

4. Polsegment (1) nach einem der Ansprüche 1 oder 2,
**dadurch gekennzeichnet, dass** die Versteifungskomponente (12) als Formstahl (10) ausgebildet ist.

5. Polsegment (1) nach Anspruch 4,
**dadurch gekennzeichnet, dass** die als Formstahl (10) ausgebildete Versteifungskomponente (12) in axialer Richtung durch einen Schenkelpol (2) verläuft.

6. Polsegment (1) nach einem der Ansprüche 4 oder 5,
**dadurch gekennzeichnet, dass** die als Formstahl (10) ausgebildete Versteifungskomponente (12) dafür vorgesehen ist die Einzelbleche (7) des Blechpakets (6) miteinander und mit der Grundplatte (5) mechanisch zu verbinden.

7. Polsegment (1) nach einem der Ansprüche 4 bis 6,
**dadurch gekennzeichnet, dass** die als Formstahl (10) ausgebildete Versteifungskomponente (12) über eine Schweißnaht (11) und/oder eine Verschraubung mit dem Blechpaket (6) mechanisch verbunden ist.

8. Polsegment (1) nach einem der vorherigen Ansprüche,
**dadurch gekennzeichnet, dass** das Polsegment (1) mindestens zwei Schenkelpole (2) aufweist.

9. Läufer (21) für eine Synchronschenkelpolmaschine (19) mit mindestens einem Polsegment (1) nach einem der Ansprüche 1 bis 8.

10. Synchronschenkelpolmaschine (19), insbesondere zum getriebelosen Antrieb von Rohrmühlen, mit mindestens einem Läufer (21) nach Anspruch 9.

11. Fertigungsverfahren zur Fertigung eines Polsegments (1) nach einem der Ansprüche 1 bis 8.

12. Fertigungsverfahren nach Anspruch 11,
**dadurch gekennzeichnet, dass** das Verschweißen der Einzelbleche (7) des Blechpakets (6) mit der Grundplatte (5) und die Versteifung des Blechpakets (6) mit der Grundplatte (5) in einem Arbeitsschritt erfolgen.

13. Fertigungsverfahren nach einem der Ansprüche 11 oder 12,
**dadurch gekennzeichnet, dass** das Funktionsmaß (18) nach der Montage des Läufers (21) im Bezug auf den Durchmesser des Läufers (21) durch mechanische Bearbeitung hergestellt wird.
